# FASCICULE DE BREVET EUROPEEN

(11) **EP 1 401 686 B1**
(45) Date de publication et mention de la délivrance du brevet: **19.11.2014**
(21) Numéro de dépôt: 02732879.8
(22) Date de dépôt: 21.05.2002
(51) Int. Cl.: B60R 21/20, B29C 41/00, B32B 27/30, C08L 27/06

(54) **PROCEDE DE FABRICATION D'UNE PEAU COMPOSITE POUR PARTIES D'HABITACLE POUR AIRBAG INTEGRE**
VERFAHREN ZUR HERSTELLUNG EINER KOMPOSITVERKLEIDUNG FÜR ARMATURENBRETTER MIT INTEGRIERTEM AIRBAG
PROCESS FOR PREPARING A COMPOSITE SKIN FOR INSTRUMENT PANEL FOR INTEGRAL AIRBAG

(30) Priorité: 22.05.2001 FR 0106734; 22.05.2001 FR 0106735
(43) Date de publication de la demande: 31.03.2004
(73) Titulaire: Kem One, 69007 Lyon (FR)
(72) Inventeur: DALZOTTO, Anne, F-51100 Reims (FR); SIMMONET, Geoffroy, F-51100 Reims (FR); BEIS, Dominique, F-51360 Prunay (FR)
(74) Mandataire: Colombet, Alain André
(86) Numéro de dépôt international: PCT/FR2002/001702
(87) Numéro de publication internationale: WO 2002/094610

(56) Documents cités:
- EP-A- 0 934 983
- WO-A-01/08934
- WO-A-02/20656
- US-A- 5 302 650
- US-A- 5 447 789
- US-A- 5 576 368
- US-A- 5 863 064
- DATABASE WPI Section Ch, Week 199228 Derwent Publications Ltd., London, GB; Class A14, AN 1992-229367 XP002219731 & JP 04 151346 A (SUMITOMO BAKELITE CO), 25 mai 1992 (1992-05-25)
- DATABASE WPI Section Ch, Week 199227 Derwent Publications Ltd., London, GB; Class A14, AN 1992-221444 XP002219732 & JP 04 143145 A (SUMITOMO BAKELITE CO), 18 mai 1992 (1992-05-18)
- DATABASE WPI Section Ch, Week 199940 Derwent Publications Ltd., London, GB; Class A14, AN 1999-474154 XP002219733 & JP 11 199698 A (TOSOH CORP), 27 juillet 1999 (1999-07-27)
- DATABASE WPI Section Ch, Week 199332 Derwent Publications Ltd., London, GB; Class A14, AN 1993-252906 XP002219734 & JP 05 170993 A (SUMITOMO BAKELITE CO), 9 juillet 1993 (1993-07-09)
- DATABASE WPI Section Ch, Week 199220 Derwent Publications Ltd., London, GB; Class A14, AN 1992-164955 XP002219735 & SU 1 666 478 A (TEXTILE LIGHT IND EXTRAMURAL INST), 30 juillet 1991 (1991-07-30)
- DATABASE WPI Section Ch, Week 199024 Derwent Publications Ltd., London, GB; Class A14, AN 1990-182647 XP002219736 & JP 02 120349 A (TOYODA GOSEI KK), 8 mai 1990 (1990-05-08)

## Description

### [Domaine technique de l'invention]

L'invention a pour objet un procédé de fabrication d'une peau composite pour les parties d'habitacle des véhicules destinées plus particulièrement à être équipées d'airbags intégrés (appelés aussi airbags invisibles). L'invention s'applique en particulier aux planches de bord et aux intérieurs de porte (ou panneaux de porte). L'invention a aussi pour objet un procédé de fabrication de cette peau, plus particulièrement par (double) slush-molding.

### [Art antérieur et problème technique]

On connaît les tableaux de bord de véhicule automobile. Les peaux de ceux-ci sont classiquement fabriquées par la technique de moulage par écoulement de poudre sur moule chaud (technique qui comprend le rotomoulage et le slush-molding).

Les documents EP-A-0 934 983 et US-A-5 863 064 décrivent des procédés classiques de fabrication de matériaux composites polymères et de peaux composites utilisées dans l'habitacle d'une voiture. EP-A-0 934 983 décrit en termes généraux les méthodes de moulage, la source de PVC étant indiquée comme un PVC obtenu par suspension. US-A-5 863 064 décrit un procédé très similaire, utilisant dans les exemples des produits issus directement d'usine, donc des PVCs qui sont vierges.

Ces tableaux de bord comprennent en général une "peau" externe (monocouche) qui donne l'aspect extérieur. Ils reçoivent désormais souvent des airbags intégrés, qui ont classiquement des temps d'ouverture très courts. Le tableau de bord présente aussi classiquement des entailles (côté intérieur). Lors de l'ouverture de l'airbag, la peau du tableau de bord ne doit pas générer de projection de particules dans l'habitacle, notamment à basse température (-35°C). A des températures plus élevées, par exemple 80°C, cette peau doit se rompre rapidement sans trop de déformation, car de telles déformations peuvent gêner le déploiement de l'airbag. Ces problèmes sont de même rencontrés pour les parties d'habitacle dans lesquelles des airbags sont insérés, par exemple les montants latéraux, lés faces arrière des sièges passagers avant, les portières, etc. Le problème est donc commun à toutes les parties d'habitacle recevant un airbag intégré (donc sensiblement invisible par les passagers et le conducteur).

Les peaux standards sont déjà en PVC plastifiés, donc pour améliorer la tenue à basse température, on augmente ce taux de plastifiant. Ceci se traduit par des problèmes de fluage trop important à 80°C. Cela conduit aussi à des formules plus chères et une productivité plus faible (cycles plus longs et rebuts de production assez élevés).

Dans la production des pièces pour véhicules notamment terrestres, se pose aussi le problème du recyclage, tant pour les refus de production que pour les déchets issus des véhicules en fin de vie (VHU, conformément à la directive européenne VHU d'octobre 2000). Ce problème de recyclage est encore plus aigu lorsqu'on souhaite un recyclage dans la même application, i.e. un recyclage isofonction.

L'invention permet de résoudre un ou deux des problèmes identifiés ci-dessus. Selon un mode de réalisation, l'invention fournit une solution globale permettant à la fois le recyclage isofonction et le comportement recherché pour la peau de -35 à 80°C.

### [Résumé de l'invention]

L'invention fournit donc d'un procédé de fabrication d'une peau composite pour parties d'habitacle pour airbag intégré comprenant une couche ductile et une couche fragile, d'après de la revendication 1.

Selon un mode de réalisation, la couche ductile est la couche intérieure et la couche fragile est la couche extérieure.

Selon un mode de réalisation, la couche ductile est la couche extérieure et la couche fragile est la couche intérieure.

Ces parties peuvent comprendre des planches de bord et/ou des panneaux de porte.

Typiquement, la couche fragile présente une rupture fragile à -35°C tandis que la couche ductile présente une rupture ductile à cette température.

Selon un mode de réalisation, la couche ductile a une température de fragilité inférieure à -35°C, de préférence entre -60°C et -40°C.

Selon un mode de réalisation, la couche fragile a une température de fragilité supérieure à -35°C, de préférence entre -30°C et -20°C.

Selon un mode de réalisation, la couche ductile et/ou fragile présente une épaisseur comprise entre 0.4 et 1.2mm, de préférence entre 0.5 et 0.9mm.

Selon un mode de réalisation, la couche ductile et/ou fragile est à base de polyoléfine thermoplastique.

Selon un mode de réalisation, la couche ductile et/ou fragile est à base de PVC plastifié.

Selon une variante de l'invention, cette couche ductile est à base d'une composition de PVC plastifié, autre objet de l'invention.

La composition destinée à être utilisée comme couche ductile selon l'invention comprend jusqu'à 98% en poids de source de PVC plastifié et au moins 2% en poids d'au moins un polymère élastomère compatible ayant de bonnes propriétés à froid, de préférence jusqu'à 95% et 5%, respectivement.

Selon un mode de réalisation, la composition comprend, en poids:
- de 50 à 98%, de préférence de 70 à 90%, de source de PVC plastifié, cette source de PVC ayant une composition |PVC de recylage/PVC vierge variable; et
- de 2 à 50%, de préférence de 30 à 10%, d'au moins un polymère compatible.

Selon un mode de réalisation, la composition comprend de 70 à 98% en poids de PVC de recyclage et de 30% à 2% en poids d'au moins un polymère compatible ayant de bonnes propriétés à froid.

Selon un mode de réalisation, la composition comprend de 10 à 50% en poids de PVC de recyclage, de 30 à 85% de PVC vierge et de 30% à 5% en poids d'au moins un polymère compatible ayant de bonnes propriétés à froid.

Selon un mode de réalisation, la composition comprend, en poids:
- 30 à 40% de PVC de recyclage;
- 10 à 20% d'au moins un polymère compatible;
- 40 à 60% de PVC vierge, ce PVC vierge contenant du PVC de Kwert 50 à 80, de préférence 55 à 75, en association avec des plastifiants, selon un ratio pondéral PVC/plastifiant de 70/30 à 40/60.

Le polymère ayant de bonnes propriétés à froid présente une température de transition vitreuse Tg inférieure à -30°C, de préférence inférieure à -40°C.

Le polymère ayant de bonnes propriétés à froid est un élastomère choisi parmi:
(i) polyuréthane thermoplastique;
(ii) polyétherester thermoplastique;
(iii) polyétherblockamide;
(iv) polymère éthylène/monomère vinylique, fonctionnalisé ou non;
(v) polymère éthylène/(meth)acrylate d'alkyle ou acide (méth)acrylique, fonctionnalisé ou non;
(vi) terpolymère éthylène/monomère vinylique/(meth)acrylate d'alkyle, fonctionnalisé ou non;
(vii) terpolymère éthylène/ monomère vinylique/carbonyle;
(viii) terpolymère éthylène/(meth)acrylate d'alkyle/carbonyle;
(ix) polymère core-shell type MBS;
(x) terpolymère blocs SBM;
(xi) polyéthylène chloré ou chlorosulfoné;
(xii) PVDF;
(xiii) élastomère processable à l'état fondu.

L'invention a aussi pour objet un procédé de préparation d'une peau pour partie d'habitacle selon l'invention, par double écoulement de poudre sur moule chaud.

### [Brève description des figures]

L'invention est maintenant décrite plus en détails dans la description qui suit et en référence aux dessins annexés, dans lesquels:

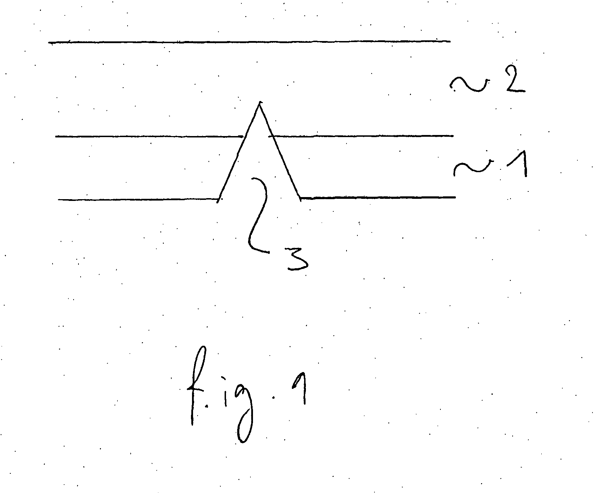

la figure 1 représente une vue en coupe de la peau produit par l'invention.

### [Description détaillée de l'invention]

L'invention repose sur le principe de la dualité rupture ductile/rupture fragile. On rappelle que la rupture fragile est une rupture après faible déformation et avec forte fragmentation, tandis que la rupture ductile est une rupture après forte déformation et sans fragmentation. La fragilité est mesurée par la température de fragilité, conformément à la norme ASTM D746.

Dans la figure, la peau comprend une couche intérieure ductile (1) et une couche extérieure fragile (2). La couche extérieure est celle se trouvant côté habitacle du véhicule. Une entaille (3) ou pré-découpe est en général présente; cette entaille en général atteint la couche fragile.

Le fonctionnement de la peau est le suivant:
- à des températures basses (typiquement -35°C), lors de l'explosion de l'airbag la couche fragile va se rompre et va rester "collée" sur la couche ductile encore souple et déformable. En général, plus la découpe est profonde, moins il faut d'énergie pour rompre la peau fragile. Dans ce cas, il y a en général moins de risqués de désolidarisation des deux couches. Ces couches sont susceptibles d'être adaptées en composition pour que la rupture soit une rupture cohésive ou adhésive; et
- à des températures élevées (typiquement 80°C), seule la couche extérieure est concernée, ce qui ne pose aucun problème, cette couche se comportant de façon classique à savoir rupture immédiate évitant ainsi une déformation de la peau (et donc des défauts de déploiement de l'airbag).

Selon un autre mode de réalisation, les couches fragile et ductile sont inversées. La pré-découpe peut être absente ou présente, dans l'une des couches seulement ou éventuellement les deux (partiellement dans l'une).

### Couche fragile.

Cette couche fragile correspond sensiblement à la peau standard utilisée actuellement. Typiquement, la température de fragilité, telle que mesurée conformément à la norme ASTM D746, est supérieure à -35°C, classiquement entre -30°C et -20°C.

Cette couche comprend un polymère adapté à l'usage comme peau. On peut citer les thermoplastiques polyoléfiniques (par exemple polypropylène fluide additivé avec des élastomères), ainsi que des polyoléfines réticulables (par exemple polyéthylène greffé silane). On peut aussi citer le polyuréthane thermoplastique et le PVC plastifié.

Le PVC susceptible d'être utilisé est classique; il peut être fabriqué notamment en masse ou en suspension ou en émulsion. Sa valeur Kwert (ci-après Kw) est comprise généralement entre 50 et 80, de préférence entre 55 et 75.

Le PVC est aussi classiquement mélangé avec des agents plastifiants, tels que trimellitate et phtalate d'alcools typiquement en C8 à C13, notamment C8 à C11. Leur quantité varie en fonction de la dureté finale recherchée, des qualités de surface, du Kwert du PVC, etc. On peut utiliser par exemple, en poids, de 30 à 60% de plastifiant.

Les autres additifs susceptibles d'être utilisés dans cette couche sont décrits dans la littérature, comme par exemple dans le document FR-A-2746807.

Cette couche fragile pourra être durcie (dureté Shore A), par rapport aux compositions pour peaux monocouches classiques, afin d'améliorer les résistances à l'abrasion et à la rayure. Il est aussi possible de réduire le Kwert de la résine base, afin d'optimiser le temps de production des peaux.

### Couche ductile.

Cette couche joue le rôle de collant à basse température: elle présente typiquement une rupture ductile à -35°C afin de maintenir les fragments générés lors de la rupture fragile de la couche fragile et contient du PVC de recyclage. A température élevée, elle est très fluidifiée, ce qui n'interfère plus avec la rupture de la couche fragile. Typiquement, la température de fragilité, telle que mesurée conformément à la norme ASTM D746, est inférieure à -35°C, classiquement entre-60°C et -40°C.

Cette couche ductile peut comprendre une couche d'adhésif, par exemple colle, vernis ou hot-melt ayant des propriétés à froid.

Cette couche ductile peut aussi être à base du même polymère que celui formant la couche fragile.

A titre d'exemple, la couche ductile peut comprendre du PVC et des plastifiants, ces derniers étant présents en des quantités supérieures à celles utilisées pour la couche fragile.

La couche ductile comprend du PVC de recyclage, qui peut provenir notamment du recyclage de tableaux de bord, et autres parties pour habitacle, etc. Ce terme de "PVC de recyclage" vise les déchets de composition à base de PVC utilisée pour la fabrication des tableaux de bord et autres parties d'habitacle telles que panneaux de porte. Les additifs classiques y sont présents, ainsi que les plastifiants. Il est similaire au terme "PVC recyclé".

La couche ductile peut aussi comprendre du PVC vierge (ce PVC vierge pouvant contenir une proportion importante de plastifiant) .

La couche ductile pourra donc contenir à la fois du PVC de recyclage et du PVC vierge.

En association avec ce PVC, on utilise un composé qui permet l'obtention des propriétés à froid. Ce composé peut être le plastifiant classique, utilisé en des quantités plus importantes (que dans la couche fragile) afin de conférer les propriétés à -35°C.

En association avec ce PVC, on utilise au moins un polymère élastomère "allié", qui est compatible et présente de bonnes propriétés à froid, susceptible de conférer une fragilité appropriée. Ce polymère allié présente une transition vitreuse Tg inférieure à -30°C, de préférence inférieure à -40°C.

La couche ductile peut donc comprendre, en poids:
- de 50 à 98% de source de PVC plastifié, de préférence 70 à 90%, cette source de PVC ayant une composition PVC de recylage/PVC vierge variable;
- de 2 à 50% d'au moins un polymère allié (polymère compatible ayant de bonne propriétés à froid), de préférence 30 à 10%.

Une formulation typique de couche ductile est la suivante:
- 30 à 40% de PVC de recyclage;
- 10 à 20% de polymère allié;
- 40 à 60% de PVC vierge, ce PVC vierge contenant du PVC de Kwert 55 à 80, de préférence 55 à 75, en association avec des plastifiants, selon un ratio pondéral PVC/plastifiant de 70/30 à 40/60.

On peut utiliser de nombreux polymères alliés élastomères, notamment thermoplastiques étant choisies parmi les polymères suivants:
(i) polyuréthane thermoplastique;
(ii) polyétherester thermoplastique;
(iii) polyétherblockàmide;
(iv) polymère éthylène/monomère vinylique, fonctionnalisé ou non;
(v) polymère éthylène/(meth)acrylate d'alkyle ou acide (méth)acrylique, fonctionnalisé ou non;
(vi) terpolymère éthylène/monomère vinylique/(meth)acrylate d'alkyle, fonctionnalisé ou non;
(vii) terpolymère éthylène/ monomère vinylique/carbonyle;
(viii) terpolymère éthylène/(meth)acrylate d'alkyle/carbonyle;
(ix) polymère core-shell type MBS;
(x) terpolymère blocs SBM;
(xi) polyéthylène chloré ou chlorosulfoné;
(xii) PVDF;
(xiii) élastomère processable à l'état fondu.

Le polyuréthane thermoplastique (i) peut notamment contenir des séquences ou blocs qui sont des segments souples. Par ce terme "segment souple", on entend par exemple des blocs polyéthers ou polyesterdiols.

On peut citer les TPU suivants:
- polyuréthanneéther, par exemple comprenant des séquences polyéther à extrémités hydroxy liées à des diisocyanates par des fonctions uréthannes;
- polyuréthanneester, par exemple comprenant des séquences polyester à extrémités hydroxy liées à des diisocyanates par des fonctions uréthannes;
- polyuréthanneétherester, par exemple comprenant des séquences polyester et des séquences polyéther à extrémités hydroxy, ces séquences étant liées à des restes diisocyanates par des fonctions uréthanne. On peut aussi avoir des chaînes polyétherpolyester à extrémités hydroxy liées à des diisocyanates par des fonctions uréthannes.

Un exemple de TPU est Estane^{®} de Goodrich, ainsi que Elastollan^{®} de BASF et Desmopan^{®} de Bayer.

Le polyétherester thermoplastique (ii) peut par exemple comprendre des séquences polyéther à extrémités hydroxy liées à des séquences polyester à extrémités acides, cette structure pouvant aussi comprendre des diols (par exemple butanediol-1,4).

Un exemple d'un tel polyétherester est Hytrel^{®} de Dupont.

Le polyétherblockamide (iii) est un copolymère à blocs polyamide et à blocs polyéther.

Ces polymères à blocs copolyamides et blocs polyéthers résultent de la copolycondensation de séquences polyamides à extrémités réactives avec des séquences polyéthers à extrémités réactives, telles que, entre autres:
(1) Séquences polyamides à bouts de chaîne diamines avec des séquences polyoxyalkylenes à bouts de chaînes dicarboxyliques;
(2) Séquences polyamides à bouts de chaînes dicarboxyliques avec des séquences polyoxyalkylenes à bouts de chaînes diamines obtenues par cyanoéthylation et hydrogénation de séquences polyoxyalkylene alpha-omega dihydroxylées aliphatique appelées polyétherdiols;
(3) Séquences polyamides à bouts de chaînes dicarboxyliques avec des polyétherdiols, les produits obtenus étant, dans ce cas particulier, des polyétheresteramides.

Les séquences polyamides à bouts de chaînes dicarboxyliques proviennent par exemple de la condensation de précurseurs de polyamides en présence d'un diacide carboxylique limiteur de chaîne.

Les séquences polyamides à bouts de chaînes diamines proviennent par exemple de la condensation de précurseurs de polyamides en présence d'une diamine limiteur de chaîne.

Les polymères à blocs polyamides et blocs polyéthers peuvent aussi comprendre des motifs répartis de façon aléatoire.

Un exemple d'un tel polyétheramide est Pebax^{®} de Atofina ainsi que Vestamid^{®} PEBA de Hüls.

Le copolymère (iv) est à base d'éthylène et d'un monomère vinylique de la famille de l'acétate de vinyle, ce monomère représentant en général de 5 à 40% en poids du copolymère.

Le copolymère (v) est à base d'éthylène et de (méth)acrylate d'alkyle, qui représente en général de 5 à 40% en poids du copolymère.

Le monomère (méth)acrylate d'alkyle peut avoir jusqu'à 24 et de préférence 10 atomes de carbone et peut être linéaire, ramifié ou cyclique. A titre d'illustration du (méth)acrylate d'alkyle, on peut citer notamment l'acrylate de n-butyle, l'acrylate d'isobutyle, l'acrylate d'éthyl-2 hexyle, l'acrylate de cyclohexyle, le méthacrylate de méthyle, le méthacrylate d'éthyle. Parmi ces (méth)acrylates, on préfère l'acrylate d'éthyle, l'acrylate de n-butyle et le méthacrylate de méthyle.

Alternativement, il est à base d'éthylène et d'acide (méth)acrylique, qui représente en général jusqu'à 10% en moles. Les fonctions acides peuvent être en tout ou en partie neutralisées par un cation (notamment métallique).

Le copolymère (vi) est à base d'éthylène et des deux comonomères décrits ci-dessus, ceux-ci étant présents dans les mêmes proportions générales.

Les enseignements donnés en regard des polymères (iv) et (v) s'appliquent ici *mutatis mutandis.*

Les polymères (iv), (v) et (vi) peuvent éventuellement être fonctionnalisés. Comme exemple de fonction, on peut citer les anhydrides, les époxydes, les isocyanates, les isoxazones, etc.

L'anhydride d'acide carboxylique insaturé peut être choisi par exemple parmi les anhydrides maléique, itaconique, citraconique, allylsuccinique, etc.

A titre d'exemple d'époxydes insaturés, on peut citer:
- les esters et éthers de glycidyle aliphatiques tels que l'allyl glycidyléther, le vinyle glycidyléther, le maléate et l'itaconate de glycidyle, le (méth)acrylate de glycidyle, et
- les esters et éthers de glycidyle alicycliques.

Ces fonctionnalités peuvent être apportées par greffage ou co- ou ter-polymérisation, selon des procédés connus.

Le terpolymère (vi) est à base d'éthylène et de monomère vinylique, comme ci-dessus pour (iv), et d'un termonomère qui est le groupe carbonyle. Les mêmes enseignements que pour la polymère (iv) s'appliquent ici. Un exemple est le terpolymère E/VA/CO. Ces polymères sont notamment vendus par DuPont sous la marque Elvaloy^{®}.

Le terpolymère (vii) est à base d'éthylène et de (méth)acrylate d'alkyle, monomère vinylique, comme ci-dessus pour (v), et d'un termonomère qui est le groupe carbonyle. Les mêmes enseignements que pour la polymère (v) s'appliquent ici. Un exemple est le terpolymère E/nBA/CO. Ces polymères sont notamment vendus par DuPont sous la marque Elvaloy^{®}.

Des exemples de tels polymères (iv), (v) et (vi), fonctionnalisés ou non sont les produits suivants: Elvaloy^{®} de DuPont, et les Lotryl^{®}, Lotader^{®}, Evatane^{®} et Orevac^{®} de Atofina.

Le polymère (ix) type MBS est un polymère à structure "core-shell" classique, utilisé comme modifiant choc. Il est obtenu classiquement par polymérisation du monomère acrylique sur une suspension ou latex d'un copolymère butadiène/styrène. Ces produits sont connus; un exemple est le produit Metablend^{®} de Atofina.

De façon générale, tous les modifiants chocs de PVC ayant de bonnes propriétés à froid sont aussi susceptibles d'être utilisés dans l'invention.

Le terpolymère blocs (x) SBM contient un premier bloc de type acrylique, un second bloc de type diénique et un troisième bloc de type styrénique, ces blocs étant obtenus notamment par synthèse anionique (sur un premier monomère qui est styrénique, puis avec un bloc diénique pour finir par un bloc acrylique).

Le premier bloc est avantageusement choisi parmi les homo- et copolymères de (méth)acrylate d'alkyle et par exemple de méthacrylate de méthyle (PMMA) et/ou d'acrylate de méthyle ou d'éthyle et éventuellement acétate de vinyle.

Le second bloc est avantageusement un poly(diènes) notamment poly(butadiène) (PB), poly(isoprène) et leurs copolymères statistiques, partiellement ou totalement hydrogénés.

Le troisième bloc C est avantageusement choisi parmi les homopolymères ou les copolymères du styrène (PS) ou de l'α-méthylstyrène.

De préférence, le tribloc SBM est un PMMA/PB/PS, avec des proportions par exemple de 30-50/30-50/20-40, et/ou une masse moléculaire Mn pour le PS des 20000 à 50000. Ce SBM préféré est utilisé dans les exemples

Le polyéthylène chloré ou chlorosulfoné (xi) est classique.

Un exemple de ces polyéthylènes chloré ou chlorosulfoné sont Tyrin^{®} de DuPont et Hypalon^{®} de DuPont-Dow, respectivement.

Le polyvinylidènedifluorure PVDF (xii) est lui aussi très classique. Des copolymères sont aussi possible, avec d'autres monomères (per)fluorés.

L'élastomère processable à l'état fondu (xiii), aussi dénommé Melt Processable Rubber, est par exemple le produit Alcryn^{®} de APA.

Des mélanges sont aussi possibles, entre polymère de même nature ou de natures différentes.

Les mêmes additifs que décrits en regard de la couche fragile peuvent être utilisés dans cette couche ductile, si nécessaire. En ce qui concerne les plastifiants, on peut en ajouter plus ou moins que dans la couche fragile. On peut n'utiliser que le phtalate. On utilisera éventuellement des modifiants de viscosité de type copolymère acétate de vinyle/chlorure de vinyle, afin d'augmenter la vitesse de gélification. Un tel copolymère favorise aussi l'adhérence entre les couches.

La couche ductile pourra être expansible, si on le souhaite. On pourra ajouter des additifs de processabilité type PMMA pour réguler la cellularisation.

Cette couche ductile présente en outre l'avantage que sa composition est simplifiée, puisque les colorants et stabilisants UV, ainsi que l'agent de démoulage notamment sont superflus.

Cette couche pourra le cas échéant être stabilisée avec des stabilisants Ca/Zn (donc "ordinaires") et/ou être enrichie en anti-amine pour servir de barrière pour la couche fragile.

Le taux de recyclage peut varier dans une très large mesure (on adapte facilement le taux de polymère allié), ce qui confère une très grande souplesse. D'autre part, la présence dans la composition de la couche ductile d'impuretés type support (PP, ABS, PC, etc.) n'est pas gênante, car en sous-couche des imperfections sont acceptables (car invisibles).

### Composition de PVC selon l'invention. composition de

La composition de PVC est utilisée pour la fabrication de la couche ductile. Cette composition, qui permet un recyclage, notamment isofonction du PVC, peut être utilisée dans d'autres applications que les parties d'habitacle pour airbag intégré.

Les caractéristiques décrites ci-dessus dans la section "couche ductile" s'appliquent à la composition *mutatis mutandis.*

### Procédé de fabrication.

Le procédé de fabrication est de préférence le procédé dit "double slush molding". Ce procédé est généralement connu, et ne se différencie du procédé classique "slush-molding" que par l'adjonction d'un bac à poudre supplémentaire.

La couche extérieure est formée en premier, classiquement, puis la poudre de la couche intérieure est introduite. A des fins d'optimisation de procédé, on peut ajuster la finesse de la poudre et le MFI final, afin d'obtenir une composition qui gélifie rapidement (afin notamment de réduire les temps de cercle). Notamment, on préférera des compositions de couche ductile ayant des MFI élevés (210°C, 2.16kg), par exemple supérieurs à 40g/10min, notamment supérieurs à 60g/10min. On pourra aussi, comme indiqué ci-dessus, incorporer des additifs prévus à cet effet.

La fabrication de poudre est classique; on peut citer le broyage cryogénique (éventuellement précédé d'une étape de granulation) et la technique de microgranulation (procédé dit Gala^{®}).

Les dimensions des poudres sont par exemple D50<1mm, par exemple D50<700µm, de préférence D50<500µm et avantageusement une D50 d'environ 300µm.

Les températures de mise en oeuvre sont elles aussi classiques, en fonction du matériau retenu pour former les couches.

On peut cependant utiliser d'autres procédés de fabrication classiques.

En ce qui concerne l'introduction du polymère allié dans le PVC vierge ou de recyclage, elle se fait de façon classique par mélange, soit sous forme de poudre, soit au niveau de l'extrudeuse, soit au niveau de la trémie de stockage (des granulés). Dans le cas du PVC de recyclage, on utilise de préférence une granulation en extrudeuse.

De façon préférée, mais non limitative, le procédé comprend les étapes suivantes. Pour la couche fragile, on part de PVC en poudre, et on ajoute dans le mélangeur les plastifiants et les stabilisants jusqu'à obtention d'une poudre sèche ("dry-blend"). Cette poudre sèche est ensuite moulée pour former la couche fragile. Pour la couche ductile, on procède dans un premier temps à une phase de granulation, au cours de laquelle on procède au mélange du PVC de recyclage, des polymères alliés et autres composants (PVC vierge et/ou additifs). On obtient des granulés qui seront ensuite micronisés, notamment par broyage cryogénique (la technique Gala étant cependant aussi possible). Cette poudre est ensuite moulée sur la couche fragile pour former la couche ductile.

### [Exemples]

Les exemples suivants illustrent l'invention sans la limiter.

### Exemple 1.

On prépare la composition de PVC (Kw env. 70) suivante (en parts en poids):

| | |
|---|---|
| PVC suspension (Kwert 70) | 99.6 |
| PVC émulsion (Kwert 64) | 12.0 |
| Huile de soja époxydée⁽¹⁾ | 6.0 |
| Trimellitate | 75.0 |
| Additifs⁽²⁾ | 7.5 |

| | |
|---|---|
| ⁽¹⁾: co-stabilisant liquide ⁽²⁾ : stabilisants, colorants, etc. | |

Cette composition est une composition de peau de tableau de bord classique. Sa fragilité est d'environ -22°C.

On prépare des peaux de tableaux de bord avec cette composition, par le procédé de slush-molding. Les peaux de ces tableaux de bord sont ensuite séparées de ceux-ci. On teste leur caractéristiques; elles ne remplissent pas les spécifications à faibles températures. Les peaux de ces tableaux de bord sont ensuite broyées. Les broyats sont utilisés dans les exemples suivants Exemple 2.

On prépare les compositions selon le tableau 1 ci-dessous. Les propriétés à froid (telles que mesurées selon la norme ASTM D-746) y sont indiquées, ainsi que les valeurs de MFI.

**Tableau 1.**

| | | | | | |
|---|---|---|---|---|---|
| Broyats Ex.1 | 100 | 80 | 80 | 80 | 80 |
| Hytrel | - | 20 | - | - | - |
| Estane | - | - | 20 | - | - |
| Pebax | - | - | - | 20 | - |
| SBM | - | - | - | - | 20 |
| Fragilité | -22°C | -50°C | -45°C | -57°C | -54°C |
| MFI (210°C, 2.16kg) g/10min | 60 | 70 | 120 | 100 | 80 |

### Exemple 3.

On prépare les compositions selon le tableau 2 ci-dessous. Les propriétés à froid y sont indiquées, ainsi que les valeurs de MFI et de dureté.

**Tableau 2.**

| | | | | |
|---|---|---|---|---|
| Broyats Ex.1 | 30 | 30 | 30 | 30 |
| TPU | 20 | - | - | - |
| Hytrel | - | 15 | - | - |
| Pebax | - | - | 15 | - |
| SBM | - | - | - | 15 |
| PVC suspension⁽¹⁾ | 26 | - | - | - |
| PVC masse ⁽²⁾ | - | 22 | 22 | 22 |
| Trimellitate | 24 | 28 | 28 | 32 |
| Stabilisant | 1 | 1 | 1 | 2 |
| VC/VA⁽³⁾ | - | 4 | 4 | 4 |
| Fragilité | -46°C | -46°C | -50°C | -54°C |
| Dureté | 66A | 63A | 65A | 71A |
| MFI (210°C, 2.16kg) g/10min | 129 | 90 | 162 | - |
| MFI (190°C, 2.16kg) g/10min | - | - | - | 37 |

| | | | | |
|---|---|---|---|---|
| ⁽¹⁾Kwert 70 ⁽²⁾Kwert 64 ⁽³⁾copolymère chlorure de vinyle et acétate de vinyle (15%). | | | | |

### Exemple 4.

On prépare les compositions selon le tableau 3 ci-dessous. Les propriétés à froid y sont indiquées, ainsi que les valeurs de MFI, de dureté et de densité.

**Tableau 2.**

| | | | | | | |
|---|---|---|---|---|---|---|
| Broyats Ex.1 | 100 | 35 | 35 | 35 | 30 | 35 |
| TPU | - | 15 | - | - | - | - |
| Hytrel | - | - | 15 | 15 | 20 | - |
| Elvaloy⁽⁴⁾ | - | - | - | - | - | 15- |
| PVC suspension⁽¹⁾ | - | 26 | - | - | - | - |
| PVC masse⁽²⁾ | - | - | 26 | 20 | 26 | 26 |
| Trimellitate | - | 12 | 12 | 12 | 12 | 7 |
| Phtalate | - | 12 | 12 | 12 | 12 | 7 |
| Acide stéarique | - | 0.5 | 0.5 | 0.5 | 0.5 | 0.5 |
| VC/VA⁽³⁾ | - | - | - | 6 | - | - |
| Fragilité | -22°C | -45°C | -50°C | -47°C | -57°C | -53°C |
| Dureté | 71A | 68A | 70A | 69A | 68A | 65A |
| MFI (210°C, 2.16kg) g/10min | 61 | 120 | 73 | 115 | 71 | 52 |
| Densité | 1.21 | 1.18- | 1.18 | 1.17 | 1.15 | 1.16 |

| | | | | | | |
|---|---|---|---|---|---|---|
| ⁽¹⁾Kwert 70 ⁽²⁾Kwert 64 ⁽³⁾copolymère chlorure de vinyle et acétate de vinyle (15%). ⁽⁴⁾terpolymère de type E/nBA/CO. | | | | | | |

### Exemple 5.

On prépare des peaux composites de tableaux de bord par double slush molding: la peau fragile est à base d'une formulation classique, selon l'exemple 1, tandis que la couche ductile est à base d'une composition selon l'invention. On prépare la poudre de la couche ductile par broyage cryogénique, jusqu'à une dimension particulaire de 300-350µm, avec une valeur maximale de 500µm. On procède à un double slush molding par moulage dans un premier temps de la couche extérieure fragile puis de la couche intérieure ductile. Les conditions de température sont classiques, notamment de 240°C à 270°C, et les temps de cycle sont par exemple de 1 à 2 min.

On obtient une couche ductile d'épaisseur 0.7-0.8mm et une couche fragile d'épaisseur 0.6-0.7mm. Ces tableaux de bord obtenus avec cette peau composite remplissent les critères de température sur l'intervalle -35°C à 80°C.

## Revendications

1. Procédé de fabrication d'une peau composite pour partie d'habitacle pour airbag intégré comprenant une couche ductile et une couche fragile, dans laquelle la couche ductile est à base de PVC plastifié et comprend jusqu'à 98% en poids de source de PVC et au moins 2% en poids d'au moins un polymère élastomère compatible ayant de bonnes propriétés à froid présentant une température de transition vitreuse Tg inférieure à -30°C ; ledit polymère étant choisi parmi:
(i) polyuréthane thermoplastique;
(ii) polyétherester thermoplastique;
(iii) polyétherblockamide;
(iv) polymère éthylène/monomère vinylique, fonctionnalisé ou non;
(v) polymère éthylène/(meth)acrylate d'alkyle ou acide (méth)acrylique, fonctionnalisé ou non;
(vi) terpolymère éthylène/monomère vinylique/(meth)acrylate d'alkyle, fonctionnalisé ou non;
(vii) terpolymère éthylène/ monomère vinylique/carbonyle;
(viii) terpolymère éthylène/(meth)acrylate d'alkyle/carbonyle;
(ix) polymère core-shell type MBS;
(x) terpolymère blocs SBM;
(xi) polyéthylène chloré ou chlorosulfoné;
(xii) PVDF;
(xiii) élastomère processable à l'état fondu,
la source de PVC plastifié comprenant du PVC de recylage ou à la fois du PVC de recyclage et du PVC vierge, ledit PVC de recyclage correspondant à des déchets de composition à base de PVC;
dans lequel on mélange la source de PVC avec ledit au moins un polymère compatible, et comprenant l'étape de fourniture de PVC de recyclage, par recyclage isofonction.

2. Procédé selon la revendication 1, dans lequel dans la peau la couche ductile est la couche intérieure et la couche fragile est la couche extérieure.

3. Procédé selon la revendication 1, dans lequel dans la peau la couche ductile est la couche extérieure et la couche fragile est la couche intérieure.

4. Procédé selon l'une des revendications 1 à 3, dans lequel dans la peau la couche ductile a une température de fragilité inférieure à -35°C, de préférence entre -60°C et -40°C, ladite température de fragilité étant mesurée conformément à la norme ASTM D746.

5. Procédé selon l'une des revendications 1 à 4, dans lequel dans la peau la couche fragile a une température de fragilité supérieure à -35°C, de préférence entre -30°C et -20°C.

6. Procédé selon l'une des revendications 1 à 5, dans lequel dans la peau la couche fragile est à base de PVC plastifié.

7. Procédé selon l'une des revendications 1 à 6, dans lequel dans la peau la couche ductile comprend, en poids:
- de 50 à 98%, de préférence de 70 à 90%, de source de PVC et
- de 2 à 50%, de préférence de 30 à 10%, d'au moins un polymère élastomère compatible.

8. Procédé selon l'une des revendications 1 à 7, dans lequel dans la peau la couche ductile comprend de 70 à 98% en poids de PVC de recyclage et de 30% à 2% en poids d'au moins un polymère élastomère compatible ayant de bonnes propriétés à froid.

9. Procédé selon l'une des revendications 1 à 7, dans lequel dans la peau la couche ductile comprend de 10 à 50% en poids de PVC de recyclage, de 30 à 85% de PVC vierge et de 30% à 5% en poids d'au moins un polymère élastomère compatible ayant de bonnes propriétés à froid.

10. Procédé selon l'une des revendications 1 à 7, dans lequel dans la peau la couche ductile comprend:
- 30 à 40% de PVC de recyclage;
- 10 à 20% d'au moins un polymère compatible;
- 40 à 60% de PVC vierge, ce PVC vierge contenant du PVC de Kwert 55 à 80, de préférence 55 à 75, en association avec des plastifiants, selon un ratio pondéral PVC/plastifiant de 70/30 à 40/60.

11. Procédé selon l'une des revendications 1 à 10, dans lequel dans la peau le polymère élastomère compatible ayant de bonnes propriétés à froid présente une température de transition vitreuse Tg inférieure à -40°C..

12. Procédé selon l'une des revendications 1 à 11, dans lequel dans la peau la couche fragile est à base de polyoléfine thermoplastique.

13. Procédé selon l'une des revendications 1 à 12, dans lequel dans la peau la couche ductile et/ou fragile présente une épaisseur comprise entre 0.4 et 1.2mm, de préférence entre 0.5 et 0.9mm.

14. Procédé selon l'une des revendications 1 à 13, par double écoulement de poudre sur moule chaud.

## Patentansprüche

1. Verfahren zur Herstellung einer Verbundhaut für einen Aufnahmebereich eines integrierten Airbags, eine formbare Schicht und eine fragile Schicht umfassend, wobei die formbare Schicht auf Basis von Weich-PVC hergestellt ist und bis 98 Gew.-% einer PVC-Quelle und mindestens 2 Gew.-% mindestens eines kompatiblen Elastomerpolymers umfasst, das gute Kalteigenschaften hat und eine Glasübergangstemperatur Tg kleiner als -30°C aufweist, wobei das Polymer ausgewählt ist aus:
(i) thermoplastisches Polyurethan;
(ii) thermoplastisches Polyetherester;
(iii) Polyetherblockamid;
(iv) Ethylenpolymer/Vinylmonomer, funktionalisiert oder nicht;
(v) Ethylenpolymer/Alkyl(meth)acrylat oder (Meth)acrylsäure, funktionalisiert oder nicht;
(vi) Ethylenterpolymer/Vinylmonomer/Alkyl(meth)acrylat, funktionalisiert oder nicht;
(vii) Ethylenterpolymer/Vinylmonomer/Carbonyl;
(viii) Ethylenterpolymer/Alkyl(meth)acrylat/Carbonyl;
(ix) Core-Shell-Polymer MBS;
(x) Blockterpolymer SBM;
(xi) Chlorpolyethylen oder chlorsulfoniertes Polyethylen;
(xii) PVDF;
(xiii) im geschmolzenen Zustand bearbeitbares Elastomer,
wobei die Quelle an Weich-PVC rezykliertes PVC oder sowohl rezykliertes PVC als auch frisches PVC umfasst, wobei das rezyklierte PVC Abfällen von Zusammensetzungen auf Basis von PVC entspricht und die Quelle des PVC mit dem mindestens einen kompatiblen Polymer gemischt wird und den Beschaffungsschritt des rezyklierten PVC durch Isofunktionsrecycling umfasst.

2. Verfahren nach Anspruch 1, bei dem bei der Haut die formbare Schicht die Innenschicht und die fragile Schicht die Außenschicht ist.

3. Verfahren nach Anspruch 1, bei dem bei der Haut die formbare Schicht die Außenschicht und die fragile Schicht die Innenschicht ist.

4. Verfahren nach einem der Ansprüche 1 bis 3, bei dem bei der Haut die formbare Schicht eine Versprödungstemperatur kleiner als -35°C, vorzugsweise zwischen -60°C und -40°C aufweist, wobei die Versprödungstemperatur entsprechend der Norm ASTM D746 gemessen wird.

5. Verfahren nach einem der Ansprüche 1 bis 4, bei dem bei der Haut die fragile Schicht eine Versprödungstemperatur größer als -35°C, vorzugsweise zwischen -30°C und -20°C aufweist.

6. Verfahren nach einem der Ansprüche 1 bis 5, bei dem bei der Haut die fragile Schicht auf Basis von Weich-PVC hergestellt ist.

7. Verfahren nach einem der Ansprüche 1 bis 6, bei dem bei der Haut die formbare Schicht umfasst:
- 50 bis 98 Gew.-%, vorzugsweise 70 bis 90 Gew.-% einer PVC-Quelle und
- 2 bis 50 Gew.-%, vorzugsweise 30 bis 10 Gew.-% mindestens eines Elastomer eines kompatiblen Elastomerpolymers.

8. Verfahren nach einem der Ansprüche 1 bis 7, bei dem bei der Haut die formbare Schicht 70 bis 98 Gew.-% an rezykliertem PVC und 30 bis 2 Gew.-% mindestens eines kompatiblen Elastomerpolymers umfasst, das gute Kälteeigenschaften hat.

9. Verfahren nach einem der Ansprüche 1 bis 7, bei dem bei der Haut die formbare Schicht 10 bis 50 Gew.-% rezykliertes PVC, 30 bis 85 Gew.-% frisches PVC und 30 bis 5 Gew.-% mindestens eines kompatiblen Elastomerpolymers mit guten Kälteeigenschaften umfasst.

10. Verfahren nach einem der Ansprüche 1 bis 7, bei dem bei der Haut die formbare Schicht umfasst:
- 30 bis 40% rezykliertes PVC;
- 10 bis 20% mindestens eines kompatiblen Polymers;
- 40 bis 60% frisches PVC, wobei das frische PVC ein PVC mit einem K-Wert von 55 bis 80, vorzugsweise 55 bis 75 in Assoziation mit Weichmachern gemäß einem Gewichtsverhältnis PVC/Weichmacher von 70/30 bis 40/60 enthält.

11. Verfahren nach einem der Ansprüche 1 bis 10, bei dem bei der Haut das kompatible Elastomerpolymer, das gute Kalteigenschaften aufweist, eine Glasübergangstemperatur Tg kleiner als -40°C aufweist.

12. Verfahren nach einem der Ansprüche 1 bis 11, bei dem bei der Haut die fragile Schicht auf Basis eines thermoplastischen Polyolefins hergestellt ist.

13. Verfahren nach einem der Ansprüche 1 bis 12, bei dem bei der Haut die formbare Schicht und/oder die fragile Schicht eine Dicke zwischen 0,4 und 1,2 mm, vorzugsweise zwischen 0,5 und 0,9 aufweist.

14. Verfahren nach einem der Ansprüche 1 bis 13 durch doppeltes Fließen von Pulver über ein heißes Formwerkzeug.

## Claims

1. Method for preparing a composite skin for instrument panel for integral airbag comprising a flexible layer and a brittle layer in which the flexible layer is based on plasticised PVC and comprises up to 98% by weight of a PVC source and at least 2% by weight of at least one compatible elastomeric polymer which has good properties when cold and has a glass transition temperature Tg less than -30°C; said polymer being chosen from:
(i) thermoplastic polyurethane;
(ii) thermoplastic polyether ester;
(iii) polyether block amide;
(iv) ethylene polymer/vinyl monomer, functionalised or non-functionalised;
(v) ethylene polymer/alkyl (meth)acrylate or (meth)acrylic acid, functionalised or non-functionalised;
(vi) ethylene terpolymer/vinyl monomer/alkyl (meth)acrylate, functionalised or non-functionalised;
(vii) ethylene terpolymer/vinyl/carbonyl monomer;
(viii) ethylene terpolymer/alkyl/carbonyl (meth)acrylate;
(ix) MBS type core-shell polymer;
(x) SBM block terpolymer;
(xi) chlorinated or chlorosulphonated polyethylene;
(xii) PVDF;
(xiii) elastomer which can be processed in the melted state,
the plasticised PVC source comprising PVC from recycling or both PVC from recycling and virgin PVC, said PVC from recycling corresponding to waste of a composition based on PVC;
in which the PVC source is mixed with said at least one compatible polymer, and comprising the step of supplying the PVC from recycling by isofunction recycling.

2. Method according to claim 1, in which in the skin the flexible layer is the interior layer and the brittle layer is the exterior layer.

3. Method according to claim 1, in which in the skin the flexible layer is the exterior layer and the brittle layer is the interior layer.

4. Method according to one of the claims 1 to 3, in which in the skin the flexible layer has a brittleness temperature less than -35°C, preferably between -60°C and -40°C, said brittleness temperature being measured according to the ASTM D746 standard.

5. Method according to one of the claims 1 to 4, in which in the skin the brittle layer has a brittleness temperature greater than -35°C, preferably between -30°C and -20°C.

6. Method according to one of the claims 1 to 5, in which in the skin the brittle layer is based on plasticised PVC.

7. Method according to one of the claims 1 to 6, in which in the skin the flexible layer comprises, by weight:
- from 50 to 98%, preferably from 70 to 90%, of the PVC source and
- from 2 to 50%, preferably from 30 to 10%, of at least one compatible elastomeric polymer.

8. Method according to one of the claims 1 to 7, in which in the skin the flexible layer comprises from 70 to 98% by weight of PVC from recycling and from 30 to 2% by weight of at least one compatible elastomeric polymer which has good properties when cold.

9. Method according to one of the claims 1 to 7, in which in the skin the flexible layer comprises from 10 to 50% by weight of PVC from recycling, from 30 to 85% of virgin PVC and from 30% to 5% by weight of at least one compatible elastomeric polymer which has good properties when cold.

10. Method according to one of the claims 1 to 7, in which in the skin the flexible layer comprises:
- 30 to 40% of PVC from recycling;
- 10 to 20% of at least one compatible polymer;
- 40 to 60% of virgin PVC, this virgin PVC containing PVC of 55 to 80 Kwert, preferably 55 to 75, in association with plasticisers, according to a weight ratio of PVC/plasticiser of 70/30 to 40/60.

11. Method according to one of the claims 1 to 10, in which in the skin the compatible elastomeric polymer which has good properties when cold has a glass transition temperature Tg less than -40°C.

12. Method according to one of the claims 1 to 11, in which in the skin the brittle layer is based on thermoplastic polyolefin.

13. Method according to one of the claims 1 to 12, in which in the skin the flexible and/or brittle layer has a thickness between 0.4 and 1.2 mm, preferably between 0.5 and 0.9 mm.

14. Method according to one of the claims 1 to 13, by double flow of powder over a hot mould.
